# EUROPEAN PATENT APPLICATION

(11) **EP 4 586 342 A1**
(43) Date of publication of application: **16.07.2025**
(21) Application number: 23863027.1
(22) Date of filing: 29.08.2023
(51) Int. Cl.: H01M 4/62, H01M 4/139

(54) **BATTERY ELECTRODE GRAPHITE DISPERSION**

(30) Priority: 08.09.2022 JP 2022143049
(71) Applicant: MITSUBISHI PENCIL COMPANY, LIMITED, Tokyo 140-8537 (JP)
(72) Inventor: MATSUSHIMA, Ryosuke, Fujioka-shi, Gunma 375-8501 (JP); HAYAKAWA, Takayuki, Tokyo 140-8537 (JP); SAKUMA, Satoshi, Fujioka-shi, Gunma 375-8501 (JP); ABE, Hiroshi, Fujioka-shi, Gunma 375-8501 (JP)
(74) Representative: Vossius & Partner Patentanwälte Rechtsanwälte mbB
(86) International application number: PCT/JP2023/031238
(87) International publication number: WO 2024/053488

(57) **Abstract**

Provided is a graphite dispersion for a battery electrode, which is suitable for production of a battery electrode of a lithium ion battery or the like. The graphite dispersion for a battery electrode of the present disclosure includes at least graphite particles having an average particle size of 5 to 50 µm, a dispersing agent, and water.

## Description

### Technical Field

The present specification relates to a graphite dispersion for a battery electrode, which is suitable for production of a battery electrode of a lithium ion battery or the like.

### Background Art

As electric vehicles became widespread and as mobile devices such as cellular phones and notebook computers became smaller, lighter and more functional, secondary batteries having high energy densities and higher capacities of the secondary batteries have been demanded. In such circumstances, many devices use non-aqueous secondary batteries, including lithium ion batteries using nonaqueous electrolytes, because of their characteristics such as high energy density and high voltage.

In the known art, use of carbon material having a high surface area, especially graphite, in a non-aqueous secondary battery including a lithium ion battery has been studied. In particular, formation of an intercalation compound in graphite and use of this intercalation compound as a secondary battery electrode material have been known, and many technologies have been disclosed. For example, Patent Document 1 describes "a secondary battery containing a positive electrode, a negative electrode, a separator, and a non-aqueous electrolyte, a non-carbonaceous material being used as an active material of the positive electrode, and a carbonaceous material having a BET specific surface area A (m²/g) in a range of 0.1 < A < 100 and a value of a crystal thickness Lc (Å) determined by X-ray diffraction and a true density ρ (g/cm³) satisfying conditions 1.80 < ρ < 2.18, 15 < Lc, and 120p - 227 < Lc < 120p - 189 being used as an active material for the negative electrode". Further, this Patent Document 1 describes that, in a case where Li⁺ ions and the like are incorporated, superior characteristics are achieved when the carbonaceous material has a certain degree of disordered structure. In addition, Patent Document 1 describes that a small surface area of the carbonaceous material is not preferred because smooth electrochemical reaction is less likely to be promoted on an electrode surface, and an excessively large specific surface area is not preferred because characteristics, such as cycle life characteristics, self-discharge characteristics, and current efficiency characteristics, deteriorate.

However, the secondary battery using the carbonaceous material of Patent Document 1 described above does not satisfactorily achieve recycling characteristics and self-discharge characteristics yet, and currently has problems in that the resistance value of the electrode itself and the like may be negatively affected. Meanwhile, Non-Patent Document 1 "Expanded Graphite and Application Thereof" describes that a graphite obtained by forming an intercalation compound and by "expanding" a graphite having a layer structure is called expanded graphite, and such expanded graphite has been widely used in various industrial fields.

As a material using graphite as a composition for an electrode, for example, Patent Document 2 describes a composition for an electroconductive paste containing a flaky graphite, a binding agent, and a solvent (containing no active material). Examples of this binding agent include a polyvinylidene fluoride, a polyimide, an acrylic emulsion, and a styrene-butadiene rubber. It is described that an electroconductive agent such as carbon nanotubes may be added to this composition of the electroconductive paste in addition to the flaked graphite, and a composition for an electrode can be formed by further adding an active material for an electrode.

However, this Patent Document 2 describes that the flaked graphite preferably contains no reactive functional group, and in this case, use of a dispersing agent becomes difficult when dispersing in various solvents such as water is performed, and it becomes impossible to achieve a lower viscosity. In fact, this composition is a "paste", and it is presumed that the composition is a significantly highly viscous composition.

Typically, in a case of a highly viscous "paste", when an electroconductive agent such as carbon nanotubes and an active material are added later, further increase in viscosity which was originally high does not become problematic; however, uniform dispersion, i.e., uniform dispersion of the electroconductive agent and the active material during application for forming an electrode, cannot be performed, and currently there are problems of negatively affecting cycle characteristics, self-discharge characteristics, and the resistance value of the electrode itself.

### Citation List

### Patent Document

Patent Document 1: JP H04-024831 B (Claims, Examples, and the like)
Non-Patent Document 1: Masahiro Toyoda (sole author), "Exfoliatation of Graphite and its applications", Tanso, vol. 233, pp. 157-165, 2008: published by The Carbon Society of Japan
Patent Document 2: WO 2021/107094 A1 (Claims, Examples, and the like)

### Summary of Invention

### Technical Problem

The present disclosure is to solve the known problems described above and the like, and an object of the present disclosure is to provide a graphite dispersion for a battery electrode that can homogeneously distribute the electroconductive agent and the active material during application for forming an electrode by using a dispersion, in which flaked graphite and the like is homogeneously dispersed and which has a low viscosity without negatively affecting insertion or withdrawal of ions such as Li⁺ and reduction in the resistance value of an electrode, and that is suitable for production of a battery electrode of a high-efficiency lithium ion battery or the like without negatively affecting the resistance value of the electrode itself while cycle characteristics and self-discharge characteristics are maintained at a high level.

### Solution to Problem

As a result of diligent research on the problems in the known art described above, the inventors of the present disclosure found that the target graphite dispersion for a battery electrode described above can be obtained by including at least graphite particles having an average particle size in a predetermined range, a dispersing agent, and water and thus completed the present disclosure.

That is, the graphite dispersion for a battery electrode of the present disclosure includes at least graphite particles having an average particle size of 5 to 50 µm, a dispersing agent, and water.

The graphite particles are preferably at least one type selected from scaly graphite particles, flaky graphite particles, spherical graphite particles, expanded graphite particles, flaked expanded graphite particles, and flaked scaly graphite particles.

The dispersing agent preferably includes at least one selected from polyvinylpyrrolidone, carboxymethyl cellulose or a salt thereof, and cellulose nanofibers.

The graphite dispersion for a battery electrode preferably has the chromaticity (a*, b*) of L*a*b* (CIELAB) color system each satisfying a* ≤ 0.7 and b* ≤ 0.5.

The graphite dispersion for a battery electrode preferably has a glossiness of a coating film applied on a flat cut surface of 20 to 40.

The graphite dispersion for a battery electrode preferably further includes electroconductive carbon particles other than graphite particles.

A slurry for a positive electrode of the present disclosure is characterized in that a carbon particle dispersion for a battery electrode further includes an active material for a positive electrode.

A slurry for a negative electrode of the present disclosure is characterized in that a carbon particle dispersion for a battery electrode further includes an active material for a negative electrode.

### Advantageous Effects of Invention

According to the present disclosure, a graphite dispersion for a battery electrode that can homogeneously distribute the electroconductive agent and the active material during application for forming an electrode by using a dispersion, in which graphite particles such as flaked graphite are homogeneously dispersed and which has a low viscosity without negatively affecting insertion or withdrawal of ions such as Li⁺ and reduction in the resistance value of an electrode, and that is suitable for production of a battery electrode of a high-efficiency lithium ion battery or the like without negatively affecting the resistance value of the electrode itself while cycle characteristics and self-discharge characteristics are maintained at a high level; and a slurry for a positive electrode and a slurry for a negative electrode having excellent electrical conductivity and stability using the graphite dispersion for a battery electrode can be provided.

The object and effects of the present disclosure can be recognized and obtained especially using the components and combinations indicated in the claims. Both general explanation described above and detailed explanation described below are exemplary and explanatory and do not limit the present disclosure described in claims.

### Description of Embodiments

Hereinafter, embodiments of the present disclosure will be described in detail. Note that the technical scope of the present disclosure is not limited to the embodiment described below but includes the invention described in Claims and equivalents thereof. In addition, the present disclosure can be implemented based on the contents disclosed in the present specification and technical common knowledge (including design matters and obvious matters) in the art.

### Graphite Dispersion for Battery Electrode

The graphite dispersion for a battery electrode of the present disclosure contains at least graphite particles having an average particle size of 5 to 50 µm, a dispersing agent, and water.

### Graphite Particle

Examples of the forms/characteristics of the graphite particles used in the present disclosure include at least one type (single type, or a mixture of two or more types, hereinafter the same) selected from scaly graphite particles, flaky graphite particles, spherical graphite particles, expanded graphite particles, flaked expanded graphite particles, and flaked scaly graphite particles. A multiple of these forms/characteristics may be employed, and examples thereof include flaked scaly graphite.

Examples of the scaly graphite that can be used include, as commercially available products, SP-270, J-SP-α, JB-5 (all available from Nippon Graphite), FT-7J (available from Fuji Graphite Works Co., Ltd.), and NOCSP.

Examples of the flaky graphite that can be used include, as commercially available products, CMX-40, UP-5N, and UP-50N (all available from Nippon Graphite). Examples of the spherical graphite include, as commercially available products, CGB-6, CGB-20, and CGC-50 (all available from Nippon Graphite).

Examples of the expanded graphite that can be used include, as commercially available products, FS-5 (all available from East Japan Carbon Co., Ltd.).

In the present disclosure, from the viewpoint of reducing sheet resistance of an electrode slurry to which a graphite dispersion is added, scaly graphite and flaked expanded graphite are particularly preferably used.

There is no problem if the average particle size of the graphite particles to be used described above is initially 5 to 50 µm. If the average particle size is greater than this, for example, a preferred properties as a dispersion for a battery electrode can be achieved by making the average particle size 5 to 50 µm after dispersing as a result of the graphite particles being crushed during a dispersing process.

In the present disclosure (e.g., Examples described below), "average particle size" means an average particle size (50% volume diameter, median size) based on volume measured by a laser diffraction/scattering method, a dynamic light scattering method, an imaging method, or the like. Examples of the measurement device include PAR-1000 (available from Otsuka Electronics Co., Ltd.) for a dynamic light scattering method, Microtrac (available from Nikkiso Co., Ltd.) for a laser diffraction/scattering method, and Mac-View (available from Mountech Co., Ltd.) for an imaging method.

The content of these graphite particles can be set to a preferred content based on the use and is not particularly limited.

For example, in a case of use in a slurry for electrical conductivity, an electrode slurry for a secondary battery, or an electrode for a secondary battery, from the viewpoint of exhibiting the effect of the present disclosure, from the viewpoint of providing high stability and electrical conductivity performance in a compatible manner, and from the viewpoint of viscosity during dispersion production, the content thereof is preferably 1 to 20 mass%, more preferably 1 to 15 mass%, even more preferably 4 to 15 mass%, and particularly preferably 4 to 12 mass%, with respect to the total amount of the graphite dispersion.

By setting the content of the graphite particles to 1 mass% or more, the degree of freedom in designing a compound increases due to reduction in an introduced amount of a solvent during electrode slurry blending, and adequate electrical conductivity can be ensured. On the other hand, by setting the content to 20 mass% or less, stability of the dispersion and excellent electrical conductivity can be ensured.

Examples of the dispersing agent used in the present disclosure in a case where the dispersion medium is water or a water-soluble solvent include at least one selected from polyvinylpyrrolidone, carboxymethyl cellulose or a salt thereof (an alkali metal salt of Li, Na, K, or the like), and cellulose nanofibers.

The content of the dispersing agent can be set to a preferred content based on the use and is not particularly limited. For example, in a case of use in a slurry for electrical conductivity, an electrode slurry for a secondary battery, or an electrode for a secondary battery, from the viewpoint of exhibiting the effect of the present disclosure and from the viewpoint of maintaining a high degree of dispersibility of the graphite particles without deterioration of other performances, the content thereof is preferably 0.4 to 2.5 mass%, more preferably 0.6 to 2.5 mass%, even more preferably 0.6 to 2.0 mass%, and particularly preferably 0.6 to 1.8 mass%, with respect to the total amount of the dispersion.

By setting the content of this dispersing agent to 0.4 mass% or more, adequate dispersibility can be ensured. On the other hand, by setting the content to 2.5 mass% or less, stability of the dispersion and excellent dispersibility can be ensured.

The dispersion medium (the rest of the dispersion) in the graphite dispersion for a battery electrode of the present disclosure can be water (e.g., purified water, distilled water, pure water, ultrapure water, tap water, and ion exchanged water), and in addition to water, a water-soluble solvent can be also used. Examples of the water-soluble solvent that can be used include at least one selected from alkylene glycols, such as ethylene glycol, triethylene glycol, tetraethylene glycol, propylene glycol, dipropylene glycol, 1,2-propanediol, 1,3-propanediol, 1,2-butanediol, 2,3-butanediol, 1,3-butanediol, 1,4-butanediol, 1,2-pentanediol, 1,5-pentanediol, 2,5-hexanediol, 3-methyl-1,3-butanediol, 2-methylpentane-2,4-diol, 3-methylpentane-1,3,5-triol, and 1,2,3-hexanetriol; polyalkylene glycols, such as polyethylene glycol and polypropylene glycol; glycerols, such as glycerol, diglycerol, and triglycerol; lower alkyl ethers of glycol, such as ethylene glycol monomethyl ether, ethylene glycol monoethyl ether, diethylene glycol monomethyl ether, and diethylene glycol mono-n-butyl ether; N-methyl-2-pyrrolidone; and 1,3-dimethyl-2-imidazolidinone.

In addition, for example, a water-soluble solvent of amides such as dimethylformamide and dimethylacetamide or ketones such as acetone can be mixed.

Although the content of the water-soluble solvent is varied depending on the solid content adjustment of the dispersion, the content is preferably 0.1 to 7 mass% with respect to the total amount of the liquid dispersion and, from the viewpoints of improving wettability of the graphite particles and mixability of the slurry, is more preferably less than 7 mass%, and even more preferably 0.1 to 5 mass%.

The graphite dispersion for a battery electrode of the present disclosure can further contain electroconductive carbon particles besides the graphite particles described above from the viewpoint of further exhibiting effect of the present disclosure.

As the electroconductive particles that can be used, carbonaceous electroconductive particles having a specific gravity that is approximately same as that of the dispersed graphite particles are preferred, and electroconductive particles that are less likely to undergo separation due to specific gravity difference even when the electroconductive particles are stored in a form of a slurry are desired. Those having a specific gravity difference between the graphite particles and the electroconductive carbon particles in a range of -0.4 to 2.0 are particularly desired.

Examples of the electroconductive carbon particles that can be used include at least one selected from carbon black particles such as acetylene black or ketjen black, and carbon nanofibers such as single-walled carbon nanotubes or multi-walled carbon nanotubes.

From the viewpoints of electrical conductivity and stability, the average outer diameter of the carbon nanofibers is preferably 1 nm or greater and 90 nm or less, more preferably 3 nm or greater and 30 nm or less, and even more preferably 3 nm or greater and 15 nm or less. This average outer diameter of the carbon nanofibers refers to an arithmetic mean value of n, which is an adequate number, of external forms measured by using an image with magnification of 100000 times or greater using a transmission electron microscope.

The content of these electroconductive carbon particles can be set to a preferred content based on the use and from the viewpoint of exhibiting the effect of the present disclosure to a maximum extent. For example, in a case of use for a slurry for electrical conductivity, an electrode slurry for a secondary battery, or an electrode for a secondary battery, the content of the electroconductive carbon particles is preferably 0.5 to 10 mass%, more preferably 0.5 to 7 mass%, and particularly preferably 0.5 to 5 mass%, with respect to the total amount of the dispersion.

The production of the graphite dispersion for a battery electrode of the present disclosure can be performed by, for example, charging at least the graphite particles having the properties described above, the dispersing agent, the water, as well as the water-soluble solvent and the like, agitating and mixing, and then performing a dispersing process.

The dispersing treatment of the dispersion described above can be performed by, but not limited to, for example, an ultrasonic dispersing device, a mixer such as a disper, a homomixer, a rotating and revolving mixer, a Henschel mixer, or a planetary mixer, a medium-type dispersing device such as a (high pressure) homogenizer, a paint conditioner, a colloid mill, a bead mill, a cone mill, a ball mill, a sand mill, an attritor, a pearl mill, or a co-ball mill, a medium-free dispersing device such as a wet jet mill or a thin-film spin system high-speed mixer, or other dispersing devices such as a roll mill.

From the viewpoints of stability and dispersing efficiency, preferred dispersing devices are a thin-film spin system high-speed mixer and a bead mill.

In the production of the graphite dispersion for a battery electrode described above, as dispersion proceeds in the dispersion process (e.g., bead mill), crushing of the graphite particles proceeds, and overall reduction in the average particle size is observed. At a stage in which dispersing time is adequately allowed (e.g., 1 hour or longer), the appearance of the dispersion becomes more black, and when a* and b* of the chromaticity (a*, b*) of the L*a*b* (CIELAB) color system are actually measured and studied, a dispersion having a* ≤ 0.7 and b* ≤ 0.5 is preferred from the viewpoint of further exhibiting effect of the present disclosure. It was confirmed by Examples and the like described below that a dispersion having L* ≤ 52.0 due to reduction in L* caused by having the aforementioned chromaticity (a*, b*) is more preferred.

Preparation of the dispersion having a* ≤ 0.7 and b* ≤ 0.5 described above can be performed by controlling the dispersing time at the time of preparation of the graphite dispersion for a battery electrode.

The L*a*b* (CIELAB) color system described above is a method to represent a color tone to evaluate a hue and is an expression of a visible color as a color system formulated by International Commission on Illumination (CIE). This (a* value, b* value) represents a hue and chroma, and the lightness (L* value) is an indicator of a tendency of blackness.

The graphite dispersion for a battery electrode of the present disclosure preferably has a glossiness of a coating film applied on a flat cut surface of 20 to 40 because the number of graphite particles is increased by reducing the thickness and reducing the particle size, and thus glossiness is achieved.

In the present disclosure (including Examples and the like described below), "glossiness" refers to a glossiness at the incident angle of 60 degrees and the light receiving angle of 60 degrees and can be measured by Digital Variable Angle Gloss Meter UGV-5 (available from Suga Test Instruments Co., Ltd.).

The reason why the glossiness of the coating film described above in a range of 20 to 40 is preferred is as follows. That is, it was found that, when the obtained graphite dispersion for a battery electrode was, for example, dried after application by a coater having a 50 µm slit on aluminum foil, the glossiness of the coating film increased more for a liquid dispersion having a longer dispersing time (e.g., glossiness 20 to 35). It is presumed that this is because the surface roughness of the coating film decreased because the average particle size of the graphite in the coating film is smaller. It is conceived that the graphite particles having the decreased average particle size has a c axis face (edge part) largely exposed, and if formation is performed in a manner that the graphite particles having this largely exposed c axis face (edge part) are in contact with other graphite particles, suitably contained electroconductive particles, or an electrode, reduction in the resistance value at the coating film can be highly expected.

Furthermore, the distance between layers of the graphite is increased if the dispersed graphite particles are particles of expanded graphite, thus in a case where the graphite particles are used for a slurry for an electrode (positive electrode, negative electrode), ions released from the active material tend to move in and out and tend to be retained, and reduction of the "resistance value" is expected from the perspective other than transfer of electrons.

Preparation of the dispersion having a glossiness in this range can be performed by, for example, controlling the dispersing time at the time of preparation of the graphite dispersion for a battery electrode.

Furthermore, from the viewpoint of obtaining fluidity of the electrode slurry prepared by adding the graphite dispersion for a battery electrode of the present disclosure, the graphite dispersion preferably has a viscosity value (mPa·s) at 25°C at a rotation rate of 10 rpm by using an E-type rotational viscometer [TV-25 (available from Toki Sangyo Co., Ltd.) rotor (1° 34' × R24 mm)] of preferably 5 to 700, and more preferably 5 to 200.

According to the present disclosure configured as described above, a graphite dispersion for a battery electrode that can uniformly distribute the electroconductive agent and the active material during application for forming an electrode by using a dispersion, in which flaked graphite and the like is homogeneously dispersed and which has a low viscosity without negatively affecting insertion or withdrawal of ions such as Li⁺ and reduction in the resistance value of an electrode, and that is suitable for production of a battery electrode of a high-efficiency lithium ion battery or the like without negatively affecting the resistance value of the electrode itself or the like while cycle characteristics and self-discharge characteristics are maintained at a high level is obtained.

Because this graphite dispersion for a battery electrode has excellent performance that is not achieved by known art, the graphite dispersion can be used for a slurry for an electrode, a slurry for a positive electrode and a slurry for a negative electrode that are suitable for use in secondary batteries, such as lithium ion batteries, by further adding various components. Furthermore, it is presumed that, in the graphite dispersion for a battery electrode further containing the electroconductive particles, the graphite particles in the graphite dispersion for a battery electrode has a c axis face (edge part) largely exposed, the contact between the electroconductive particle surface and the c axis face (edge part) is increased, and by this contact, an even lower resistance value is expected for the coating film from the mixture of the graphite dispersion and the electroconductive particles. Furthermore, in a case of large electroconductive particles such as carbon nanotubes, many c axis faces (edge parts) of the graphite particles dispersed in the dispersion are brought into contact around the large electroconductive particles, and thus it is expected that ions released from the active material described below tend to move in and out and tend to be retained in the gap around the contact part of the large electroconductive particle and the c axis faces (edge parts) of the dispersed graphite particles in addition to the reduction in the resistance value described above.

### Slurry for Positive Electrode

The slurry for a positive electrode of the present disclosure is characterized by containing, in the graphite dispersion for a battery electrode configured as described above, an active material for a positive electrode.

The active material for a positive electrode that can be used is not particularly limited as long as the active material is a typical positive electrode active material that can be used for a positive electrode of a lithium ion battery (active material that allows reversible insertion and withdrawal of lithium ions). Examples thereof include a composite oxide of lithium and a transition metal such as a lithium-nickel composite oxide, a lithium-cobalt composite oxide, a lithium-manganese composite oxide, a lithium-nickel-manganese composite oxide, a lithium-nickel-cobalt composite oxide, a lithium-nickel-aluminum composite oxide, a lithium-nickel-cobalt-aluminum composite oxide, a lithium-nickel-manganese-cobalt composite oxide, a lithium-nickel-manganese-aluminum composite oxide, and a lithium-nickel-cobalt-manganese-aluminum composite oxide, a transition metal sulfide such as TiS₂, FeS, and MoS₂, a transition metal oxide such as MnO, V₂O₅, V₆O₁₃, and TiO₂, and an olivine-type lithium phosphorus oxide. For example, the olivine-type lithium phosphorus oxide contains at least one element selected from the group consisting of Mn, Cr, Co, Cu, Ni, V, Mo, Ti, Zn, Al, Ga, Mg, B, Nb, and Fe, lithium, phosphorus, and oxygen. These compounds may have some elements partially substituted with other elements to improve the characteristics of the compounds.

The preferred active material for a positive electrode is a lithium-nickel composite oxide, and the lithium-nickel composite oxide is more preferably a lithium-nickel composite oxide represented by a formula: LiNi_{X}M1_{Y}M2_{Z}O₂ (M1 and M2 are each at least one metal element selected from Al, B, alkali metals, alkaline earth metals, and transition metals, 0.8 ≤ X ≤ 1.0, 0 ≤ Y ≤ 0.2, 0 ≤ Z ≤ 0.2).

One type of these active materials for positive electrodes may be used alone, or two or more types of these active materials for positive electrodes may be used in combination.

In the slurry for a positive electrode of the present disclosure, from the viewpoint of ensuring a battery capacity and from the viewpoint of ensuring fluidity of the slurry, the content of the active material for a positive electrode described above is preferably 50 to 70 mass%, and more preferably 50 to 63 mass%, with respect to the total amount of the slurry for a positive electrode.

Furthermore, the content of the graphite dispersion for a battery electrode configured as described above is, in terms of solid content, preferably 0.5 to 10 mass%, and more preferably 0.5 to 7 mass%, with respect to the total amount of the slurry for a positive electrode.

In addition to the active material for a positive electrode in the graphite dispersion for a battery electrode configured as described above, the slurry for a positive electrode of the present disclosure can optionally contain a solid electrolyte such as a sulfide solid electrolyte, an oxide solid electrolyte, a dry polymer electrolyte, a gel polymer electrolyte, or a quasi solidstate electrolyte.

### Slurry for Negative Electrode

The slurry for a negative electrode of the present disclosure is characterized by containing, in the graphite dispersion for a battery electrode configured as described above, an active material for a negative electrode.

As the active material for a negative electrode that can be used, an active material having no electrical conductivity can be used without particular limitation and, for example, metal oxide-based active material particles and silicon-based active material particles, especially metal oxide-based negative electrode active material particles, can be used.

As the metal oxide-based negative electrode active material particles, for example, titanium oxide can be used. The titanium oxide is not particularly limited as long as the titanium oxide is capable of occlusion and releasing of lithium and, for example, a spinel lithium titanate, a ramsdellite lithium titanate, a titanium-containing metal composite oxide, a titanium dioxide having a crystal structure of a monoclinic system (TiO₂ (B)), and an anatase titanium dioxide can be used.

Examples of the spinel lithium titanate include Li₄+xTi₅O₁₂ (x varies in a range of -1 ≤ x ≤ 3 due to charge and discharge reaction). Examples of the ramsdellite lithium titanate include Li₂+yTi₃O₇ (y varies in a range of -1 ≤ y ≤ 3 due to charge and discharge reaction). Examples of the TiO₂ (B) and the anatase titanium dioxide include Li₁+zTiO₂ (z varies in a range of -1 ≤ z ≤ 0 due to charge and discharge reaction).

Examples of the titanium-containing metal composite oxide include a metal composite oxide containing Ti and at least one element selected from the group consisting of P, V, Sn, Cu, Ni, and Fe. Examples of the metal composite oxide containing Ti and at least one element selected from the group consisting of P, V, Sn, Cu, Ni, and Fe include TiO₂-P₂O₅, TiO₂-V₂O₅, TiO₂-P₂O₅-SnO₂, and TiO₂-P₂O₅-MeO (Me is at least one element selected from the group consisting of Cu, Ni, and Fe).

Such a metal composite oxide preferably has a low crystallinity and preferably has a microstructure in which a crystal phase and an amorphous phase coexist or an amorphous phase exists alone. By employing the microstructure, cycle performance can be further improved.

In the slurry for a negative electrode of the present disclosure, from the viewpoint of ensuring a battery capacity and from the viewpoint of ensuring fluidity of the slurry, the content of the active material for a negative electrode described above is preferably 30 to 60 mass%, and more preferably 35 to 55 mass%, with respect to the total amount of the slurry for a negative electrode.

Furthermore, the content of the graphite dispersion for a battery electrode configured as described above is, in terms of solid content, preferably 0.5 to 10 mass%, and more preferably 0.5 to 7 mass%, with respect to the total amount of the slurry for a negative electrode.

In addition to the active material for a negative electrode in the graphite dispersion for a battery electrode configured described above, the slurry for a negative electrode of the present disclosure can optionally contain a solid electrolyte such as a sulfide solid electrolyte, an oxide solid electrolyte, a dry polymer electrolyte, a gel polymer electrolyte, or a quasi solidstate electrolyte.

An electrode for a secondary battery can be obtained by using the slurry for a positive electrode and the slurry for a negative electrode obtained as described above.

The slurry for a positive electrode and the slurry for a negative electrode obtained as described above preferably further contain a binder.

Examples of the binder that can be used include a fluororesin such as a polyimide-based resin, a polyvinylidene fluoride (PVdF), a polytetrafluoroethylene, a tetrafluoroethylene-hexafluoropropylene-vinylidene fluoride-based copolymer, a hexafluoropropylene-vinylidene fluoride-based copolymer, or a tetrafluoroethylene-perfluoro vinyl ether-based copolymer, a polyolefin resin such as polyethylene or polypropylene, polyvinylpyrrolidone, polyvinyl alcohol, a styrene-butadiene rubber (SBR), and an acrylic resin. A mixture of two or more types of these binders may also be used.

The amount of these binders is preferably 0.2 to 3.0 mass%, and more preferably 0.5 to 2.5 mass%, with respect to the total amount of each of the electrode slurry for a secondary battery from the viewpoints of adhesiveness to a current collector foil and battery capacity and charge-discharge characteristics after a cell is formed.

Furthermore, various solvents may be added to the slurry for each of the electrodes described above. Examples of the solvent include water (e.g., purified water, ion exchanged water, distilled water, ultrapure water), aromatic solvents, alcohols, polyhydric alcohols, ether-based solvents, glycol ether-based solvents, ester-based solvents, amine-based solvents, amide-based solvents, heterocyclic solvents, sulfoxide-based solvents, and sulfone-based solvents. One type of these solvents may be used alone, or two or more types of these solvents may be mixed and used.

The amount of these solvents to be added is preferably 0.5 to 80 mass%, and more preferably 1 to 70 mass%, with respect to the total amount of each of the electrode slurry for a secondary battery from the viewpoint of need for adjusting the viscosity to a suitable viscosity at the time of application of the slurry for each electrode.

Furthermore, to the slurry for each electrode described above, a leveling agent, a solid electrolyte material, and the like are appropriately blended in addition to the graphite dispersion for a battery electrode describe above, each active material, and a binder in a range that does not impair the effect of the present disclosure.

The slurry for each electrode for a secondary battery configured as described above can be prepared by using the graphite dispersion for a battery electrode described above, each active material for a positive electrode or a negative electrode for a secondary battery, a binder, a solvent, and the like and, for example, using a twin-screw kneader or the like.

A positive electrode or a negative electrode for a predetermined lithium ion secondary battery can be obtained by applying and drying each of the obtained electrode slurries for a secondary battery on a current collector that is an electroconductive member of a lithium ion secondary battery, and in the present disclosure, each electrode slurry for a secondary battery that can achieve battery properties, which can withstand repeated charging and discharging for a long period of time, and an electrode for a secondary battery can be obtained.

The material and shape of the current collector used for the electrode described above are not particularly limited, and those appropriate for various secondary batteries can be appropriately selected. Examples of the material of the current collector include a metal such as aluminum, copper, nickel, titanium, or stainless steel and an alloy. Furthermore, as a shape, a sheetlike foil is typically used; however, a current collector having a roughened surface, a current collector in a perforated foil form, and a mesh-like current collector can also be used.

As the method for applying an electrode paste onto a current collector, a known method can be used without particular limitations. Specific examples thereof include, but not particularly limited to, a die coating method, a dip coating method, a roll coating method, a doctor blade coating method, a knife coating method, a spray coating method, a gravure coating method, a screen printing method, or an electrostatic coating method. As the drying method, for example, natural air drying, an air-blow dryer, a hot-air dryer, an infrared heater, or a far infrared heater can be used without particular limitation. Furthermore, rolling treatment by a flatbed press, calender rolls, or the like may be performed after application. The thickness of the electrode material layer is typically 1 µm or greater and 500 µm or less, and preferably 10 µm or greater and 300 µm or less. Because the slurry for a positive electrode or a negative electrode of the present disclosure uses the graphite dispersion for a battery electrode having the characteristics described above, the electroconductive agent and the active material can be homogeneously distributed at the time of application for forming an electrode, no negative effects occur in cycle characteristics, self-discharge characteristics, and the resistance value of the electrode itself, and excellent electrical conductivity and stability are achieved.

### Secondary Battery, Lithium Ion Secondary Battery

The secondary battery can be obtained by using the electrode for a secondary battery described above and is preferably a secondary battery using the electrodes for a secondary battery described above as a positive electrode and a negative electrode of a lithium ion secondary battery, the lithium ion secondary battery including the positive electrode, the negative electrode, and an electrolyte. A case of use in a lithium ion secondary battery will be described below.

As the positive electrode, an electrode produced by applying and drying the slurry for a positive electrode described above containing the positive electrode active material on the current collector described above can be used.

As the negative electrode, an electrode produced by applying and drying the slurry for a negative electrode described above containing the negative electrode active material on the current collector described above can be used.

As the electrolyte, various known electrolytes, in which ions can transfer, can be used. Examples of the electrolyte include, but not limited to, electrolytes containing a lithium salt such as LiBF₄, LiClO₄, LiPF₆, LiAsF₆, LiSbF₆, LiCF₃SO₃, Li(CF₃SO₂)₂N, LiC₄F₉SO₃, Li (CF₃SO₂)₃C, LiI, LiBr, LiCl, LiAlCl, LiHF₂, LiSCN, and LiBPh₄ (however, Ph is a phenyl group). The electrolyte is preferably used as an electrolyte by dissolving the electrolyte in a nonaqueous solvent.

Examples of the nonaqueous solvent include, but not particularly limited to, carbonates such as ethylene carbonate, propylene carbonate, butylene carbonate, dimethyl carbonate, ethylmethyl carbonate, and diethyl carbonate; lactones such as γ-butyrolactone, γ-valerolactone, and γ-octanoic lactone; glymes such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; esters such as methyl formate, methyl acetate, and methyl propionate; sulfoxides such as dimethyl sulfoxide and sulfolane; and nitriles such as acetonitrile. These solvents may be each used alone, or two or more types of these solvents may be mixed and used.

In the present disclosure, the lithium ion secondary battery preferably includes a separator. Examples of the separator include, but not particularly limited to, a polyethylene nonwoven fabric, a polypropylene nonwoven fabric, a polyamide nonwoven fabric, and separators obtained by subjecting these to a hydrophilic treatment.

The structure of the lithium ion secondary battery is not particularly limited, and typically, the lithium ion secondary battery is composed of a positive electrode, a negative electrode, and an optionally provided separator, and may have various forms depending on the purpose of use, such as a paper form, a cylinder form, a button form, a laminate form, or the like.

The lithium ion secondary battery that is the secondary battery configured as described above and the like can achieve battery performances that can withstand repeated charging and discharging for a long period of time.

### Example

Hereinafter, the present disclosure will be described using Examples, but the present disclosure is not limited to these Examples.

Preparation of Graphite Dispersions A to H for Battery Electrodes Each of the graphite dispersions A to H for battery electrodes were obtained by dispersing the components in the formulation [amounts of graphite particles, electroconductive carbon particles, dispersing agent, and water serving as a dispersion medium] listed in Table 1 below by using a dispersing device (dispersing treatment was performed by a bead mill using φ1.0 mm zirconia beads under a peripheral speed set at 10 m/s).

For the obtained graphite dispersions A to H for battery electrodes, L*a*b* color system, viscosity, and glossiness were measured by the following measurement method.

### Method for Measuring of L*a*b* Color System

The a* value, the b* value, and the L* value were measured by using Colour Meter SC-P (available from Suga Test Instruments Co., Ltd.).

Method for Measuring Average Particle Size of Graphite Particles The average particle size of the graphite particles in the dispersion was measured by using Particle Size Analyzer MT3300II (available from MicrotracBEL Corp.).

### Method for Measuring Viscosity Value

The viscosity value at 25°C was measured by using an E-type rotational viscometer [TV-25 (available from Toki Sangyo Co., Ltd.) rotor (1°34' × R 24 mm)] at a rotation rate of 10 rpm.

### Method for Measuring Glossiness

The glossiness was measured by using Digital Variable Angle Gloss Meter UGV-5 (available from Suga Test Instruments Co., Ltd.). These evaluation results are shown in Table 1 below.

**[Table 1]**

| Total amount 100 mass%) | | | | | | | | | | |
|---|---|---|---|---|---|---|---|---|---|---|
| | | | Graphite dispersion for battery electrode | | | | | | | |
| | | | A | B | C | D | E | F | G | H |
| Graphite particles | Scaly graphite particles | *1 | | | | | 4 | | 2.4 | |
| | Flaked expanded graphite particles | *2 | | | | 12 | | 2 | | |
| | Expanded graphite particles | *3 | | | | | | | | 4 |
| Electroconductive carbon particles | Carbon nanotube 1 | *4 | 2.4 | | 4 | | 4 | 2 | | 4 |
| | Carbon nanotube 2 | *5 | | 2.4 | | | | | 2.4 | |
| Dispersing agent | Polyvinylpyrrolidone | *6 | 1.2 | 1.2 | | | | | | |
| | Carboxymethyl cellulose | *7 | | | 1.1 | 1.1 | 1.1 | 0.55 | | 1.1 |
| | Cellulose nanofiber 2 | *8 | | | | | | | 0.6 | |
| Water | Ion exchanged water | | 96.4 | 96.4 | 94.9 | 86.9 | 90.9 | 95.45 | 94.6 | 90.9 |
| Specific gravity difference between graphite particles and electroconductive carbon particles | | | - | - | - | - | 0.15 | 0.2 | 0.3 | 0.18 |
| L*a*b* Color System | a* | | 0.8 | 0.9 | 0.85 | 0.6 | 0.66 | 0.62 | 0.64 | 0.65 |
| | b* | | 0.6 | 0.52 | 0.74 | 0.11 | 0.4 | 0.3 | 0.49 | 0.5 |
| | L* | | 12 | 12 | 9 | 50 | 31 | 27 | 36 | 29 |
| Average particle size of graphite particles (µm) | | | - | - | - | 9 | 7 | 11 | 6 | 5 |
| Viscosity (mPa·s) | | | 13 | 16 | 542 | 280 | 660 | 44 | 123 | 485 |
| Glossiness | | | 15 | 12 | 15 | 35 | 26 | 24 | 25 | 28 |

| | | | | | | | | | | |
|---|---|---|---|---|---|---|---|---|---|---|
| *1 to *8 in Table 1 are described as below. *1: J-SP-α (average particle size: 6 µm, available from Nippon Graphite Co., Ltd.) *2: CMX-40 (average particle size: 40 µm, available from Nippon Graphite Co., Ltd.) *3: FS5 (average particle size: 7 µm, available from East Japan Carbon Co., Ltd.) *4: FT9200 (average outer diameter: 19 nm, available from CNANO Co., Ltd.) *5: NC7000 (average outer diameter: 9.5 nm, available from Nanocyl SA) *6: PVP K30 (available from BASF) *7: CMC Daicel 1330 (available from Daicel Miraizu Co., Ltd.) *8: BiNFi-s (available from Sugino Machine Co., Ltd.) | | | | | | | | | | |

### Examples 1 to 7 and Comparative Examples 1 and 2

Using each of the graphite dispersions A to H for battery electrodes obtained as described above, the components in the formulation [the carbon particles, each of the dispersions A to H, the dispersing agent, and the like] listed in Table 2 below was dispersed by using a dispersing device (dispersing treatment was performed by a bead mill using φ1.0 mm zirconia beads under a peripheral speed set at 10 m/s). A slurry for an electrode was obtained by charging the obtained dispersion into a planetary mixer, adding a binder material of SBR, and kneading this composition at a revolution rate of 10 rpm for 120 minutes. For the obtained slurry for an electrode, the sheet resistance which is an evaluation for the electrical conductivity was measured by the following measurement method.

The completed slurry for an electrode was applied on one face of a PET film (Lumirror #100-T60, available from Toray Co., Inc.) by using an applicator having a 50 µm opening and then dried at a temperature of 80°C, and the resistance value of the obtained film was measured. The resistance value was measured as a sheet resistance by using a device including four-needle probe with a needle interval of 10 mm and mQ HiTESTER 3227 (Hioki E.E. Corporation).

Excellent electrical conductivity is confirmed by the sheet resistance of 1.0 kΩ/□ or less.

Furthermore, for the obtained slurry for an electrode, the properties of each of the electrode slurry other than the electrical conductivity described above (each of the viscosities at shear rates of 0.1 S⁻¹ and 1000 s⁻¹, solid content, Microtrac D50 (µm), pH, each of the viscosities at 1 rpm and 10 rpm) were measured by the following methods.

Methods for Measuring Viscosity Values at Shear Rates of 0.1 S⁻¹ and 1000 s⁻¹ and Viscosities at 0.14 S⁻¹ and 1000 s⁻¹

Using a rheometer (MCR-102 (available from Anton Paar), Cone-Plate CP50-2), each of the viscosity values (25°C) at 0.1 s⁻¹ and 1000 s⁻¹ at the time of returning when the shear rate was oscillated between 0.1 s⁻¹ to 1000 s⁻¹ in 60 seconds was measured.

### Method for Measuring Solid Content

Measurement was performed at 180°C for 10 minutes by using a halogen moisture analyzer (HC-103, available from Mettler Toledo).

### Method for Measuring Microtrac D50

Measurement was performed by using a particle size distribution analyzer (MT3000, available from MicrotracBEL Corp.).

### Method for Measuring pH

The pH was measured at 25°C by using a glass-electrode pH meter. Method for Measuring Viscosity Values at 1 rpm and 10 rpm

The viscosity value (25°C) was measured by using an E-type rotational viscometer (TV-25 (available from Toki Sangyo Co., Ltd.) rotor (1°34' × R 24 mm)) at each rotation rate of 1 rpm and 10 rpm.

**[Table 2]**

| Raw material type | Raw material name | Example | | | | | | | Comparative Example | |
|---|---|---|---|---|---|---|---|---|---|---|
| | | 1 | 2 | 3 | 4 | 5 | 6 | 7 | 1 | 2 |
| Active material | Lithium titanate (LTO) | 45 | 45 | 47 | 50 | 50 | 47 | 45 | 40 | 40 |
| Carbon particles | Carbon black (DENKA BLACK, available from Denka Co.,Ltd.) | 0.9 | 0.9 | 0.94 | 1 | 1 | 0.94 | 0.9 | 0.8 | 0.8 |
| | Scaly graphite particles (J-SP-α, available from Nippon Graphite) | | | | | | | | 0.8 | 0.8 |
| Dispersion type (Table 1) | Dispersion A | | | | | | | | 33.33 | |
| | Dispersion B | | | | | | | | | 33.33 |
| | Dispersion C | 22.5 | 22.5 | | | | | | | |
| | Dispersion D | 7.5 | 7.5 | | | | | | | |
| | Dispersion E | | | 23.5 | | | | | | |
| | Dispersion F | | | | | | | 45 | | |
| | Dispersion G | | | | 41.67 | 41.67 | | | | |
| | Dispersion H | | | | | | 23.5 | | | |
| Dispersing agent | Carboxymethyl cellulose A (Sunrose F150LC, available from Nippon Paper Industries Co.,Ltd.) | 0.34 | | | | | | 0.34 | 0.6 | 0.6 |
| | Carboxymethyl cellulose B (CMC Daicel 1330, available from Daicel Miraizu Ltd.) | 0.06 | 0.345 | | 0.75 | 0.75 | 0.447 | 0.31 | | |
| | Polyvinylpyrrolidone (K-30, available from BASF) | | | 0.447 | | | | | | |
| | Cellulose nanofiber (RHEOCRYSTA, available from DKS Co.,Ltd.) | | 3.125 | 3.263 | | | 3.263 | | | |
| Binding agent | SBR (S2910(E)-12-Na, available from JSR Corporation) | 1.41 | 2.25 | 2.35 | 1.56 | 1.56 | 2.35 | 1.41 | 1.25 | 1.25 |
| Preservative | BIOSAIDO 1760 (available from Taisho Technos Co., Ltd.) | | | | | 0.1 | | | | |
| Water | Ion exchanged water | 22.29 | 18.38 | 22.5 | 5.02 | 4.92 | 22.5 | 7.04 | 23.22 | 23.22 |
| Total | | 100 | 100 | 100 | 100 | 100 | 100 | 100 | 100 | 100 |
| Evaluation | | | | | | | | | | |
| 0.1 s⁻¹ viscosity (Pa·s) | | 164 | 15 | 19 | 24 | 29 | 18 | 143 | 35 | 47 |
| 1000 s⁻¹ viscosity (Pa·s) | | 0.37 | 0.2 | 0.21 | 0.24 | 0.24 | 0.24 | 0.38 | 0.28 | 0.27 |
| Solid content (%) | | 49.8 | 49.4 | 52.2 | 55.6 | 55.8 | 52.2 | 48.9 | 44 | 44 |
| Microtrac D50 (µm) | | 1.4 | 1.5 | 1.4 | 1.4 | 1.4 | 1.4 | 1.8 | 1.6 | 1.6 |
| pH | | 7.2 | 7.3 | 7.5 | 6.3 | 8.5 | 7.2 | 7.7 | 7.1 | 6.4 |
| Sheet resistance (kΩ/□) | | 0.28 | 0.39 | 0.34 | 0.73 | 0.84 | 0.3 | 0.19 | 1.12 | 2.64 |
| 1 rpm | | 12020 | 3480 | 5020 | 4840 | 4650 | 4250 | 8640 | 8360 | 10400 |
| 10 rpm | | 1999 | 708 | 906 | 867 | 855 | 879 | 1491 | 2013 | 2146 |

As is clear from evaluation results of Table 1 and Table 2 described above and the like, the slurry for an electrode, which included each of the dispersions of Examples 1 to 7 that are in the scope of the present disclosure provided excellent stability and excellent electrical conductivity in a compatible manner to a high degree without impairing the predetermined properties. In contrast, the slurries for electrodes of Comparative Examples 1 and 2 did not satisfactorily achieve the properties described above.

### Industrial Applicability

The graphite dispersion for a battery electrode has excellent stability and electroconductive performances, is useful as a material for fuel cells, various electrodes, electromagnetic shielding materials, electroconductive resins, components for field-emission displays, and the like, can be particularly used for production of electrode slurry (suitable for positive electrode and for negative electrode) and electrode for production of an electrode of a lithium ion secondary battery and the like, and can achieve excellent battery performances that can withstand repeated charging and discharging for a long period of time.

## Claims

1. A graphite dispersion for a battery electrode, the graphite dispersion comprising at least graphite particles having an average particle size of 5 to 50 µm, a dispersing agent, and water.

2. The graphite dispersion for a battery electrode according to claim 1, wherein the graphite particles comprise at least one type selected from scaly graphite particles, flaky graphite particles, spherical graphite particles, expanded graphite particles, flaked expanded graphite particles, and flaked scaly graphite particles.

3. The graphite dispersion for a battery electrode according to claim 1 or 2, wherein the dispersing agent comprises at least one selected from polyvinylpyrrolidone, carboxymethyl cellulose or a salt thereof, and cellulose nanofibers.

4. The graphite dispersion for a battery electrode according to claim 1 or 2, wherein a chromaticity (a*, b*) of L*a*b* (CIELAB) color system satisfies a* ≤ 0.7 and b* ≤ 0.5.

5. The graphite dispersion for a battery electrode according to claim 1 or 2, wherein glossiness of a coating film applied on a flat cut surface is 20 to 40.

6. The graphite dispersion for a battery electrode according to claim 1 or 2, wherein the graphite dispersion further comprises electroconductive carbon particles other than graphite particles.

7. A slurry for a positive electrode, wherein the slurry comprising the carbon particle dispersion for a battery electrode described in claim 4 further comprises an active material for a positive electrode.

8. A slurry for a negative electrode, wherein the slurry comprising the carbon particle dispersion for a battery electrode described in claim 4 further comprises an active material for a negative electrode.
